(19) Europäisches Patentamt / European Patent Office / Office européen des brevets

(11) **EP 2 064 163 B1**

(12) **EUROPEAN PATENT SPECIFICATION**

(45) Date of publication and mention
of the grant of the patent:
**21.01.2015 Bulletin 2015/04**

(21) Application number: **07868339.8**

(22) Date of filing: **17.09.2007**

(51) Int Cl.:
**C06B 23/00** $^{(2006.01)}$     **C08J 9/00** $^{(2006.01)}$

(86) International application number:
**PCT/US2007/078611**

(87) International publication number:
**WO 2008/060747 (22.05.2008 Gazette 2008/21)**

(54) **MICROPOROUS MATERIAL CONTAINING A SECURITY FEATURE**

MIKROPORÖSES MATERIAL MIT SICHERHEITSMERKMAL

MATÉRIAU MICROPOREUX CONTENANT UN ÉLÉMENT DE SÉCURITÉ

(84) Designated Contracting States:
**AT FR GB IT**

(30) Priority: **19.09.2006 US 845575 P**
**14.09.2007 US 855723**

(43) Date of publication of application:
**03.06.2009 Bulletin 2009/23**

(73) Proprietor: **PPG Industries Ohio, Inc.**
**Cleveland, OH 44111 (US)**

(72) Inventors:
• **BENENATI, Paul L.**
**Wadsworth, Ohio 44281 (US)**

• **BOYER, James L.**
**Monroeville, Pennsylvania 15146 (US)**
• **COLEMAN, Charles R.**
**Pittsburgh, Pennsylvania 15215 (US)**
• **PARRINELLO, Luciano M.**
**Allison Park, Pennsylvania 15101 (US)**
• **RAMAN, Narayan K.**
**Pittsburgh, Pennsylvania 15206 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**US-A- 4 053 433     US-A- 5 196 262**

**Description**

## FIELD OF THE INVENTION

This invention relates to articles comprising a microporous material that contains a security feature. In particular, this invention relates to a microporous material having a minor amount of identifiable taggant material embedded within the matrix comprising the microporous material.

## BACKGROUND OF THE INVENTION

Legal, financial and identification documents ("Documents") are used daily in many aspects of everyday life in today's society. Common non-limiting examples of identification documents are identification cards, passports and drivers licenses. Non-limiting examples of financial documents are bank notes, bonds, checks and letters of credit. Non-limiting examples of legal documents are settlement agreements and other contractual agreements, and real estate deeds. Unfortunately, such documents have been illegally duplicated or altered to produce counterfeit replicates. To prevent counterfeiting or illegal alteration of such Documents or the information contained therein, a variety of methods have been employed. Some of such methods involve laminating a layer of clear material, e.g., plastic film, to the core of an identification document; the use of adhesives that make it difficult to separate such layers without destroying the document; laminating several layers of clear material to the core of an identification document, each of which clear layers contain one or more security features; and the use of covert features the presence of which is not visible without the use of special equipment, e.g., an instrument (reader) that identifies the security feature. However, because counterfeiters have become more adept at avoiding such preventative measures, it is important to provide different and more complex security features that will prevent counterfeiting or illegal alteration of Documents.

US 4,053,433 discloses a method of tagging individual units of production of a substance with micro-particles for retrospective identification, wherein micro-particles are used which are encoded with an orderly sequence of visually distinguishable colored segments.

## SUMMARY OF THE INVENTION

The present invention relates to a microporous material comprising a matrix of polyolefin, finely-divided, substantially water insoluble particulate filler, a network of interconnecting pores communicating throughout the microporous material, and at least one retrospectively identifiable taggant material selected from any material, materials or arrangement of materials that when embedded in an article comprising a microporous material provides a marker, signature or code to the article that is capable of retrospective identification embedded within the matrix, wherein the polyolefin comprises 20 to 60 weight percent, based on the weight of the microporous material.

Also provided is an article in the form of a sheet comprising the microporous material described above, as well as a multi-layer article wherein at least one layer comprises the microporous material. Additionally, present invention is directed to a process for preparing an article in the form of a microporous sheet comprising the steps of:

a) providing a processing plasticizer, a polyolefin, a finely-divided, substantially water insoluble particulate filler, and at least one retrospectively identifiable taggant as defined above, wherein the taggant material provides at least one observable feature chosen from color, size, shape, electrical resistance, a detectable odor, a feature that is identifiable audibly, and a response to an energy stimulus chosen from visible light, non-visible light, heat, cold, electric current, electrical energy, and a magnetic field;

b) combining the processing plasticizer, polyolefin, particulate filler, and taggant material to form a substantially uniform mixture;

c) introducing the mixture into a heated barrel of a screw extruder to which is attached a sheeting die;

d) passing the mixture through the extruder and die to form a continuous microporous sheet;

e) removing the processing plasticizer from the sheet using an organic extraction liquid; and

f) removing the extraction liquid from the sheet. The polyolefin can comprise from 20 to 60 weight percent of the microporous sheet.

## DETAILED DESCRIPTION OF THE INVENTION

For purposes of this specification as used in this specification and the appended claims, the singular forms "a", "an" and "the" are intended to include plural referents, unless expressly and unequivocally limited to one referent.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in its respective testing measurement, including that found in the measuring instrument. Also, it is to be understood that any numerical range recited in this specification is intended to include all sub-ranges subsumed therein. For example, a range of "1 to 10" is intended to include all sub-ranges between and including the recited minimum value of 1 and the recited maximum value of 10, i.e., a range having a minimum value equal to or greater than 1 and a maximum value of equal to or less than 10. Because the disclosed numerical ranges are continuous, they include every value between the minimum and maximum values. Unless expressly indicated otherwise, the various numerical ranges specified in this application are approximations.

As used in the following description and claims, the following terms have the indicated meanings:

The term "Document" is intended to mean and include, but not be limited to, identification documents, financial documents, legal documents, certificates of accomplishment, and other similar documents.

The term "Identification Document" is intended to mean and include, but not be limited to, documents such as credit cards, debit cards, bank cards, phone cards, passports, driver's licenses, network access cards, employee badges, security cards, visas, immigration documentation, regional or national identification (ID) cards, citizenship cards, social security cards, security badges, voter registration cards, police ID cards, border crossing cards or documentation, security clearance badges and cards, gun permits, gift certificates or cards, labels, documents showing ownership of an article, such as an automobile title or registration card, documents showing the source or place of origin of goods, membership cards or badges, and certificates of accomplishment, including, but not limited to, graduation diplomas and graduate degrees.

The term "Financial Document" is intended to mean and include, but not be limited to, documents such as, bonds, bond coupons, certificates of deposit, checks, letters of credit and other negotiable instruments.

The term "Legal Document" is intended to mean and include, but not be limited to, contracts, conveyances, settlement agreements, other contractual agreements and real estate deeds.

The term "minor amount", as used for example in the phrase "minor amount of retrospectively identifiable taggant material" means an amount that is less than 5 weight percent, based on the weight of the unaltered microporous material, e.g., an unprinted or non impregnated sheet of microporous material.

The term "embedded", as used for example in connection with the taggant material being embedded within the matrix comprising the microporous material, is intended to mean that the embedded material is dispersed within the matrix of the microporous material as may be accomplished, for example, by blending the taggant with the ingredients used to prepare the microporous material before the microporous material is formed into an article, e.g., a sheet. The term "embedded" excludes taggant material applied to the surface of a preformed matrix of microporous material, or taggant material that has been applied to the surface of a preformed matrix of microporous material and allowed to be adsorbed to an area just below the surface of a preformed matrix of microporous material, as for example by applying ink to the surface of the preformed matrix.

The term "taggant" is intended to mean any material, materials or arrangement of materials that when embedded in an article comprising a microporous material provides a marker, signature or code to the article that is capable of retrospective identification. The marker, signature or code ("feature") may be, but is not limited to, a visual, covert or forensically identifiable feature (i.e., identifiable with or without a machine or instrument) that serves to distinguish a genuine article from a non-genuine article, or to indicate the articles source of manufacture or origin.

The term "retrospective identification" and like terms means and is intended to include, but is not limited to, the identification of taggants embedded in Documents by means that include, but are not limited to, identification visually by observation with the human naked eye, and/or by the use of at least one machine or instrument. In the case of identification by machine or instrument, non-limiting examples include taggants that provide a feature that is in a form that is visible using a machine or instrument ("Reader") that reads the feature optically such as by magnification or microscopy, under infra-red (near or far), ultra-violet or other non-visible radiation, e.g., by X-ray or gamma radiation; or a taggant that provides a feature that can be identified audibly or acoustically, by detectable odor, by atomic absorption spectroscopy, by emission spectroscopy, by X-ray fluorescence analysis, by neutron irradiation, by activation analysis, by DNA analysis, by fingerprint analysis, by electrical means, e.g., by measuring conductivity or resistance, by thermal analysis, or by other optical means, e.g., by the use of polarization, photochromic and/or thermochromic materials; by chemical or mechanical analysis, or a taggant that provides a feature that produces a magnetic charge under the appropriate stimulation; and by combinations of one or more of such identifiable taggants.

The term "identifiable" is intended to mean and include, but is not limited to, identification by the naked human eye and/or by a machine or instrument; identification by chemical, electrical, thermal, or mechanical analysis; or other analytical means identification by an acoustic or audible feature (human or animal recognition); or identification by odor.

The term "covert", e.g., a covert security feature, is intended to mean and include, but is not limited to, a feature the presence of which is not visible to the user with the naked eye, requiring the use of special equipment, e.g., a Reader.

The term "forensic", e.g., a forensic security feature, means a covert feature whose presence, absence or adulteration is detected by the use of one or more chemical and/or physical analytical methods, e.g., DNA analysis.

The term "printable", as used for example in connection with the term printable microporous material, means that the subject material can be printed using some printing media, for example, printing inks, and one or more printing methods. Non-limiting examples of such printing methods include, but are not limited to, typographic printing, e.g., rubber stamp printing, letterpress printing, flexography, and letterset printing (also known as dry offset printing and offset letterpress printing); intaglio printing, and gravure printing; planographic printing, e.g., lithography, hectograph printing and xerography; stencil printing, e.g., screen printing and mimeographic printing; typewriting and dot matrix printing; ink jet printing and electrophotographic printing.

The present disclosure describes several different features and aspects of the invention with reference to various exemplary embodiments. It is understood, however, that the invention embraces numerous alternative embodiments, which may be accomplished by combining any of the different features, aspects, and embodiments described herein in any combination that one of ordinary skill in the art would find useful.

The present invention is directed to a microporous material comprising a matrix of polyolefin; finely-divided, substantially water insoluble particulate filler; a network of interconnecting pores communicating throughout the microporous material; and at least one retrospectively identifiable taggant material embedded within the matrix.

As previously mentioned, the present invention also is directed to an article, typically in the form of a sheet, comprising the aforementioned microporous material which contains at least one retrospectively identifiable taggant material embedded within the matrix comprising the microporous material. The taggant material(s) can vary depending on the type of feature(s) that is desired to be embedded within the microporous material, e.g., the type of retrospective identification feature(s) that is to be used to verify the authenticity of the article, and the cost of using a particular taggant, including the cost involved in the retrospective identification process.

The taggant material(s) can provide at least one response that include, but are not limited to, a visual response such as color, size and/or shape, and/or a response to energy stimuli such as visual light, heat and/or cold, and non-visible light such as infrared light and ultraviolet light, electric current, electrical energy and a magnetic field and/or the taggant materials themselves can influence or alter an electrical or magnetic field. Taggant materials are commercially available from various sources. Suitable examples can include, but are not limited to Microtaggant® brand identification particles, which are available from Microtrace, LLC of Minneapolis, Minnesota; NightGlo[TN] phosphorescent pigments from Day Glo Color Corporation of Cleveland, Ohio; and Techmer PM 52511825 blue additive from Techmer PM of Rancho Dominguez, California.

The taggant materials can be chosen, for example, from a visually observant dye, fiber and/or pigment. Also the taggant can be for example, a material that is chosen from fluorescent materials, phosphorescent materials, dichroic dye pigments, polarizable materials, photochromic materials, thermochromic materials, electrochromic materials, infrared and near infrared light-responsive materials, ultraviolet light-responsive materials, materials responsive to other forms of radiation such as X-ray and gamma rays, semi-conducting nanocrystals including but not limited to compounds such as cadmium selenide, magnesium selenide, calcium selenide, barium selenide and zinc selenide, materials that are identifiable by reflection or absorption of light, materials that emit an audible or acoustic signal, materials that emit an odor, magnetic materials, conductive materials and materials that are responsive to stimuli by a magnetic field. If the microporous material is a microporous sheet that is produced by for example extrusion, the taggant material chosen should be resistant to temperatures to which it may be exposed during extrusion or other processing during its preparation.

Non-limiting examples of microparticles (i.e., taggants) that can be used for purposes of retrospective identification are described, for example, in column 2, line 28 to column 6, line 47 of U.S. Patent 4,053,433 and in column 1, line 46 to column 3 , line 33 of U.S. Patent 4,390,452. Such taggants include a sequence of visually distinguishable dyed and/or pigmented layers or other identifying indicia. The taggants can be coded with particular color sequences and/or alpha numeric codes that can be detected visually with a microscope or other magnifying devices. For example, the taggant material can contain a numeric code sequence in a multiple colored layer format. See also, U.S. Patent 6,647,649 at column 3, line 40 to column 7, line 20. The size of the taggant material can vary. In a non-limiting embodiment, the size of the taggant material can vary from 1 micron to 1 millimeter, e.g., from 10 microns to 600, such as from 20 or 50 microns to 250 microns, at their average cross section.

The taggant material can comprise combinations of chemical elements that are incorporated into microspheroids of glass beads in discrete concentration levels, e.g., in amounts of 0.5, 1.0, and 2.0 percent by weight. The microspheroids can range from 1 to 250 microns, e.g., from 20 to 100 microns. See the description in column 1, line 55 to column 4, line 15 of U.S. Patent 3,772,200, and which uses combinations of ten chemical elements.

Taggant materials that comprise energy-sensitive materials can be embedded in the microporous material for purposes of retrospective identification. Non-limiting examples of energy sensitive materials include photochromic, dichroic polarizable and/or thermochromic media, e.g., dyes, which have different optical properties under different conditions. For example, a thermochromic material is transparent in one temperature range, but opaque outside of that range. Photochromic materials can be transparent or one color under white light of a specified range of frequencies, e.g., from 400 to 750 nanometers, but a different color when exposed to light outside of that range of frequencies, e.g., to ultraviolet light. A combination of photochromic materials each of which produce different colors in response to ultraviolet light allow the production of colors that comprise a blend of the colors produced by different photochromic materials to be produced in response to their exposure to the energy of certain wavelengths of ultraviolet light.

In certain embodiments of the present invention, the taggant material provides at least one observable feature chosen from color, size, shape, electrical resistance, photoluminescence, a detectable odor, a feature that is identifiable audibly, and a response to energy stimuli chosen from visual light, non-visible light, heat, cold, electric current, electrical energy, and a magnetic field. The taggant material also can comprise a magnetic material that provides a unique magnetic signature, or a material that exhibits a unique NMR spectrum.

In a further embodiment of the present invention, the taggant material can provide an observable feature in response to energy stimuli chosen from fluorescent light, infra-red radiation, ultraviolet radiation, X-ray radiation and gamma radiation. For example, the taggant material may comprise an infra-red or ultraviolet light sensitive material that is responsive to certain frequencies of near or far infra-red light or to ultraviolet light. Such materials fluoresce when exposed to the particular predetermined wavelength of the selected light source.

Additionally, the taggant can comprise a material that provides an optically variable feature, which can be provided by optically variable pigments, inks, dyes and colorants ("optically variable media"). In this feature, the optically variable media appears to change color as the viewing angle of an observer changes (or as the angle of incident light striking the media changes. A non-limiting example of a media that provides an optically variable feature are relatively small particles, e.g., flakes comprising flat, irregularly shaped mica platelets coated with titanium dioxide and/or iron oxide. These particles can give a "pearlescent" effect, while smaller particles can produce a "satin" effect and larger particles produce a "glitter" effect. See for example page 5, paragraphs [0057] and [0058] of US patent publication 2005/0067497.

It also is contemplated that the taggant can comprise a liquid crystal that exhibits a difference in color when viewed in transmission and reflection as well as an angularly dependent colored reflection. See, for example, page 5, paragraphs [0059] and [0060] of US patent publication 2005/0067497.

Combinations of any of the aforementioned taggants may be used.

The concentration of taggant material embedded in the microporous material can vary depending on whether it is desired that the taggant be visually identifiable without special equipment or magnification; if the taggant is to be visually identifiable with special equipment and/or magnification, e.g., a covert taggant; including using forensic means. Typically, the identification means and type of taggant material used is determined by the desired end use of the microporous material and the articles formed therefrom.

The taggant material can be present within the microporous material matrix in an amount ranging from 0.001 to 80 weight percent based on weight of the microporous material, such as from 0.001 to 50 weight percent, or from 0.01 to 30 weight percent, or from 0.001 to 20 weight percent or from 0.001 to 10 weight percent.

In an alternative embodiment, the taggant material is present in the microporous material in a minor amount. That is, the taggant material can be present in amounts ranging from 0.001 to 5 weight percent, based on the weight of the microporous material. For example the taggant material can be present in the microporous material in amounts of from 0.01 to 4 weight percent, e.g., from 0.1 to 3 weight percent, or from 1 to 2 weight percent. Also, the taggant material (depending on the size of the taggant particle) can be present within the microporous material in a concentration of from 1 to 300 particles per square inch of microporous material. Alternatively, the taggant material(s) can be present in trace amounts, for example in a positive amount up to and including 0.001 percent by weight, based on the weight of the microporous material.

As previously mentioned in addition to the taggant material, the microporous material of the present invention comprises polyolefin, finely-divided substantially water-insoluble particulate filler, and a network of interconnecting pores communicating throughout the microporous material. The microporous material can comprise a substrate having at least one surface comprising the aforementioned polyolefin, particulate filler and network of interconnecting pores. The polyolefin typically comprises 5 to 75 weight percent, such as 9 to 71 weight percent, or 10 to 65 weight percent, or 20 to 60 weight percent, or 25 to 50 weight percent, or 30 to 45 weight percent, based on total weight of the microporous material.

The polyolefin can comprise any of a wide variety of polyolefin materials known in the art. In one embodiment, the polyolefin comprises (a) ultrahigh molecular weight polyolefin comprising ultrahigh molecular weight polyethylene and/or ultrahigh molecular weight polypropylene; (b) high density polyolefin comprising high density polyethylene and/or high density polypropylene; or mixtures of any of the foregoing polyolefins.

Non-limiting examples of the ultrahigh molecular weight (UHMW) polyolefin can include essentially linear UHMW polyethylene or polypropylene. Inasmuch as UHMW polyolefins are not thermoset polymers having an infinite molecular weight, they are technically classified as thermoplastic materials.

The ultrahigh molecular weight polypropylene can comprise essentially linear ultrahigh molecular weight isotactic polypropylene. Often the degree of isotacticity of such polymer is at least 95 percent, e.g., at least 98 percent.

While there is no particular restriction on the upper limit of the intrinsic viscosity of the UHMW polyethylene, in one non-limiting example, the intrinsic viscosity can range from 18 to 39 deciliters/gram, e.g., from 18 to 32 deciliters/gram. While there is no particular restriction on the upper limit of the intrinsic viscosity of the UHMW polypropylene, in one non-limiting example, the intrinsic viscosity can range from 6 to 18 deciliters/gram, e.g., from 7 to 16 deciliters/gram.

As used herein, intrinsic viscosity is determined by extrapolating to zero concentration the reduced viscosities or the inherent viscosities of several dilute solutions of the UHMW polyolefin where the solvent is freshly distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the UHMW polyolefin are ascertained from relative viscosities obtained at 135 °C using an Ubbelohde No. 1 viscometer in accordance with the general procedures of ASTM D 4020-81, except that several dilute solutions of differing concentration are employed.

The nominal molecular weight of UHMW polyethylene is empirically related to the intrinsic viscosity of the polymer in accordance with the following equation:

$$M = 5.37 \times 10^4 \, [\acute{\eta}]^{1.37}$$

wherein M is the nominal molecular weight and $[\acute{\eta}]$ is the intrinsic viscosity of the UHMW polyethylene expressed in deciliters/gram. Similarly, the nominal molecular weight of UHMW polypropylene is empirically related to the intrinsic viscosity of the polymer according to the following equation:

$$M = 8.88 \times 10^4 \, [\acute{\eta}]^{1.25}$$

wherein M is the nominal molecular weight and $[\acute{\eta}]$ is the intrinsic viscosity of the UHMW polypropylene expressed in deciliters/gram.

A mixture of substantially linear ultrahigh molecular weight polyethylene and lower molecular weight polyethylene also can be used. In a non-limiting embodiment, the UHMW polyethylene has an intrinsic viscosity of at least 10 deciliters/gram, and the lower molecular weight polyethylene has an ASTM D 1238-86 Condition E melt index of less than 50 grams/10 minutes, e.g., less than 25 grams/10 minutes, such as less than 15 grams/10 minutes, and an ASTM D 1238-86 Condition F melt index of at least 0.1 gram/10 minutes, e.g., at least 0.5 gram/10 minutes, such as at least 1.0 gram/10 minutes. The amount of UHMW polyethylene used (as weight percent) in this embodiment is described in column 1, line 52 to column 2, line 18 of U.S. Patent 5,196,262. More particularly, the weight percent of UHMW polyethylene used is described in relation to Figure 6 of the '262 patent; namely, with reference to the polygons ABCDEF, GHCI or JHCK of Figure 6, which Figure is incorporated herein by reference.

The nominal molecular weight of the lower molecular weight polyethylene (LMWPE) is lower than that of the UHMW polyethylene. LMWPE is a thermoplastic material and many different types are known. One method of classification is by density, expressed in grams/cubic centimeter and rounded to the nearest thousandth, in accordance with ASTM D 1248-84 (Reapproved 1989). Non-limiting examples of the densities of LMWPE are found in the following Table 1.

<div align="center">TABLE 1</div>

| Type | Abbreviation | Density, g/cm$^3$ |
|---|---|---|
| Low Density Polyethylene | LDPE | 0.910-0.925 |
| Medium Density Polyethylene | MDPE | 0.926-0.940 |
| High Density Polyethylene | HDPE | 0.941-0.965 |

Any or all of the polyethylenes listed in Table 1 may be used as the LMWPE in the matrix of the microporous material. HDPE may be used because it can be more linear than MDPE or LDPE. Processes for making the various LMWPE's are well known and well documented. They include the high pressure process, the Phillips Petroleum Company process, the Standard Oil Company (Indiana) process, and the Ziegler process. The ASTM D 1238-86 Condition E (that is, 190° C. and 2.16 kilogram load) melt index of the LMWPE is less than about 50 grams/10 minutes. Often the Condition E melt index is less than about 25 grams/10 minutes. The Condition E melt index can be less than about 15 grams/10 minutes. The ASTM D 1238-86 Condition F (that is, 190° C. and 21.6 kilogram load) melt index of the LMWPE is at least 0.1 gram/10 minutes. In many cases the Condition F melt index is at least 0.5 gram/10 minutes such as at least 1.0 gram/10 minutes.

The UHMWPE and the LMWPE may together constitute at least 65 percent by weight, e.g., at least 85 percent by weight, of the polymer of the microporous material. Also, the UHMWPE and LMWPE together may constitute substantially 100 percent by weight of the polymer of the microporous material. In a particular embodiment of the present invention, the microporous material can comprise a polyolefin comprising from 10 to 100 weight percent, such as from 10 to 90 weight percent, or from 20 to 85 weight percent, or from 35 to 65 weight percent of ultrahigh molecular weight polyolefin; and from 0 to 90 weight percent, such as from 10 to 90 weight percent, or from 20 to 85 weight percent, or from 35 to 65 weight percent of high density polyolefin, where weight percents are based on the total weight of polyolefin in the microporous material.

Other thermoplastic organic polymers also may be present in the matrix of the microporous material provided that their presence does not materially affect the properties of the microporous material substrate in an adverse manner. The amount of the other thermoplastic polymer which may be present depends upon the nature of such polymer. In general, a greater amount of other thermoplastic organic polymer may be used if the molecular structure contains little branching, few long side chains, and few bulky side groups, than when there is a large amount of branching, many long side chains, or many bulky side groups. Non-limiting examples of thermoplastic organic polymers that optionally may be present in the matrix of the microporous material include low density polyethylene, high density polyethylene, poly(tetrafluoroethylene), polypropylene, copolymers of ethylene and propylene, copolymers of ethylene and acrylic acid, and copolymers of ethylene and methacrylic acid. If desired, all or a portion of the carboxyl groups of carboxyl-containing copolymers can be neutralized with sodium, zinc or the like. Generally, the microporous material comprises at least 70 percent by weight of UHMW polyolefin, based on the weight of the matrix. In a non-limiting embodiment, the above-described other thermoplastic organic polymer are substantially absent from the matrix of the microporous material.

As previously mentioned, the microporous material also comprises a finely-divided, substantially water-insoluble particulate filler material. The filler material typically is not colored, e.g., is a white or off-white filler material such as a siliceous or clay particulate material.

The finely divided substantially water-insoluble filler particles can constitute from 20 to 85 percent by weight of the microporous material. For example such filler particles can constitute from 20 to 80 percent by weight of the microporous material, such as from 20 percent to 70 percent by weight of the microporous material, or from 30 to 70 percent by weight of the microporous material, or from 40 to 70 percent by weight of the microporous material and even from 45 percent to 65 percent by weight of the microporous material.

The finely divided substantially water-insoluble siliceous filler may be in the form of ultimate particles, aggregates of ultimate particles, or a combination of both. At least about 90 percent by weight of the siliceous filler used in preparing the microporous material substrate has gross particle sizes in the range of from 5 to about 40 micrometers, as determined by the use of a laser diffraction particle size instrument, LS230 from Beckman Coulton, capable of measuring particle diameters as small as 0.04 micron. Typically, at least 90 percent by weight of the filler has gross particle sizes in the range of from 10 to 30 micrometers. The sizes of the siliceous filler agglomerates may be reduced during processing of the ingredients used to prepare the microporous material. Accordingly, the distribution of gross particle sizes in the microporous material may be smaller than in the raw filler itself.

Non-limiting examples of siliceous fillers that may be used to prepare the microporous material include silica, mica, montmorillonite, kaolinite, nanoclays such as cloisite available from Southern Clay Products, talc, diatomaceous earth; vermiculite, natural and synthetic zeolites, calcium silicate, aluminum silicate, sodium aluminum silicate, aluminum polysilicate, alumina silica gels and glass particles. In addition to the siliceous fillers, other finely divided particulate substantially water-insoluble fillers optionally may also be employed. Non-limiting examples of such optional fillers can include carbon black, charcoal, graphite, titanium oxide, iron oxide, copper oxide, zinc oxide, antimony oxide, zirconia, magnesia, alumina, molybdenum disulfide, zinc sulfide, barium sulfate, strontium sulfate, calcium carbonate, and magnesium carbonate. In one non-limiting embodiment, silica and any of the aforementioned clays can comprise the siliceous filler. Non-limiting examples of the silicas include precipitated silica, silica gel, and fumed silica.

Silica gel is generally produced commercially by acidifying an aqueous solution of a soluble metal silicate, e.g., sodium silicate at low pH with acid. The acid employed is generally a strong mineral acid such as sulfuric acid or hydrochloric acid, although carbon dioxide can be used. Inasmuch as there is essentially no difference in density between the gel phase and the surrounding liquid phase while the viscosity is low, the gel phase does not settle out, that is to say, it does not precipitate. Consequently, silica gel may he described as a non-precipitated, coherent, rigid, three-dimensional network of contiguous particles of colloidal amorphous silica. The state of subdivision ranges from large, solid masses to submicroscopic particles, and the degree of hydration from almost anhydrous silica to soft gelatinous masses containing on the order of 100 parts of water per part of silica by weight.

Precipitated silica generally is produced commercially by combining an aqueous solution of a soluble metal silicate, ordinarily alkali metal silicate such as sodium silicate, and an acid so that colloidal particles of silica will grow in a weakly alkaline solution and be coagulated by the alkali metal ions of the resulting soluble alkali metal salt. Various acids may be used, including but not limited to mineral acids. Non-limiting examples of acids that can be used include hydrochloric acid and sulfuric acid, but carbon dioxide can also be used to produce precipitated silica. In the absence of a coagulant, silica is not precipitated from solution at any pH. In a non-limiting embodiment, the coagulant used to effect precipitation of silica may be the soluble alkali metal salt produced during formation of the colloidal silica particles, or it may be an added electrolyte, such as a soluble inorganic or organic salt, or it may be a combination of both.

Precipitated silica can be described as precipitated aggregates of ultimate particles of colloidal amorphous silica that have not at any point existed as macroscopic gel during the preparation. The sizes of the aggregates and the degree of hydration may vary widely. Precipitated silica powders differ from silica gels that have been pulverized in generally having a more open structure, that is, a higher specific pore volume. However, the specific surface area of precipitated silica, as measured by the Brunauer, Emmet, Teller (BET) method using nitrogen as the adsorbate, is often lower than that of silica gel.

Many different precipitated silicas can be employed as the siliceous filler used to prepare the microporous material. Precipitated silicas are well-known commercial materials, and processes for producing them are described in detail in many United States Patents, including U.S. Patents 2,940,830, 2,940, 830, and 4,681,750. The average ultimate particle size (irrespective of whether or not the ultimate particles are agglomerated) of precipitated silicas used is generally less than 0.1 micrometer, e.g., less than 0.05 micrometer or less than 0.03 micrometer, as determined by transmission electron microscopy. Precipitated silicas are available in many grades and forms from PPG Industries, Inc. These silicas are sold under the Hi-Sil® tradename.

In a non-limiting embodiment, finely divided particulate substantially water-insoluble siliceous filler comprises at least 50 percent by weight, e.g., at least 65, 75 or 85 percent by weight of the substantially water-insoluble filler material. The siliceous filler can comprise from 50 to 90 percent by weight, e.g., from 60 to 80 percent by weight, of the filler material or the siliceous filler can comprise substantially all of the substantially water-insoluble filler material.

The filler, e.g., the siliceous filler, typically has a high surface area allowing the filler to carry much of the processing plasticizer used to form the microporous material. High surface area fillers are materials of very small particle size, materials that have a high degree of porosity, or materials that exhibit both characteristics. The surface area of at least the siliceous filler particles can range from 20 to 400 square meters per gram, e.g., from 25 to 350 square meters per gram, as determined by the Brunauer, Emmett, Teller (BET) method according to ASTM D1993-91. The BET surface area is determined by fitting five relative-pressure points from a nitrogen sorption isotherm measurement made using a Micromeritics TriStar 3000™ instrument. A FlowPrep-060™ station can be used to provide heat and continuous gas flow during sample preparation. Prior to nitrogen sorption, silica samples are dried by heating to 160°C in flowing nitrogen (PS) for 1 hour. Generally, but not necessarily, the surface area of any non- siliceous filler particles used is also within one of these ranges. The filler particles are substantially water-insoluble and also can be substantially insoluble in any organic processing liquid used to prepare the microporous material. This can facilitate retention of the filler in the microporous material.

Other materials such as lubricants, processing plasticizers, organic extraction liquids, surfactants, water, and the like, optionally may be present in the microporous material. Such materials may be present in the microporous material in relatively small amounts, for example 15 percent by weight, but more or less of such materials can be used as necessary. Additionally the microporous material of the present invention can include antioxidants, ultraviolet light absorbers, flame retardants, reinforcing fibers such as chopped glass fiber strand, dyes, pigments, and the like.

On an impregnant-free basis, pores can comprise on average at least 15 percent by volume, e.g. from at least 20 to 95 percent by volume, or from at least 25 to 95 percent by volume, or from at least 35 to 65 percent by volume of the microporous material. As used herein and in the claims, the porosity (also known as void volume) of the microporous material, expressed as percent by volume, is determined according to the following equation:

$$\text{Porosity} = 100[1 - d_1 / d_2]$$

wherein $d_1$ is the density of the sample, which is determined from the sample weight and the sample volume as ascertained from measurements of the sample dimensions, and $d_2$ is the density of the solid portion of the sample, which is determined from the sample weight and the volume of the solid portion of the sample. The volume of the solid portion of the same is determined using a Quantachrome stereopycnometer (Quantachrome Corp.) in accordance with the accompanying operating manual. Alternatively, the porosity can be calculated as described in the Examples below.

The volume average diameter of the pores of the microporous material can be determined by mercury porosimetry using an Autoscan mercury porosimeter (Quantachrome Corp.) in accordance with the accompanying operating manual. The volume average pore radius for a single scan is automatically determined by the porosimeter. In operating the porosimeter, a scan is made in the high pressure range (from 138 kilopascals absolute to 227 megapascals absolute). If approximately 2 percent or less of the total intruded volume occurs at the low end (from 138 to 250 kilopascals absolute) of the high pressure range, the volume average pore diameter is taken as twice the volume average pore radius determined by the porosimeter. Otherwise, an additional scan is made in the low pressure range (from 7 to 165 kilopascals absolute) and the volume average pore diameter is calculated according to the equation:

$$d = 2 \left[ v_1 r_1 / w_1 + v_2 r_2 / w_2 \right] / \left[ v_1 / w_1 + v_2 / w_2 \right]$$

wherein d is the volume average pore diameter, $v_1$ is the total volume of mercury intruded in the high pressure range, $v_2$ is the total volume of mercury intruded in the low pressure range, $r_1$ is the volume average pore radius determined from the high pressure scan, $r_2$ is the volume average pore radius determined from the low pressure scan, $w_1$ is the weight of the sample subjected to the high pressure scan, and $w_2$ is the weight of the sample subjected to the low pressure scan. The volume average diameter of the pores can be in the range of from 0.01 to 0.50 micrometers, e.g., from 0.02 to about 0.3 micrometers, such as from 0.05 to about 0.25 micrometers.

In the course of determining the volume average pore diameter of the above procedure, the maximum pore radius detected is sometimes noted. This is taken from the low pressure range scan, if run; otherwise it is taken from the high pressure range scan. The maximum pore diameter is twice the maximum pore radius. Inasmuch as some production or treatment steps, e.g., coating processes, printing processes, impregnation processes and/or bonding processes, can result in the filling of at least some of the pores of the microporous material, and since some of these processes irreversibly compress the microporous material, the parameters in respect of porosity, volume average diameter of the pores, and maximum pore diameter are determined for the microporous material prior to the application of one or more of such production or treatment steps.

The microporous material of the present invention typically exhibits a surface resistivity in the range of $1 \times 10^5$ to $1 \times 10^{12}$ to ohms per square, such as $1 \times 10^7$ to $1 \times 10^{10}$ ohms per square, and a static decay time at 50% relative humidity of 0.001 to 2 seconds, such as 0.002 to 1 second, thereby demonstrating superior static dissipation properties. "Surface resistivity" is a measure of the resistive and/or conductive properties of insulative materials in ohms/square as determined in accordance with *ASTM D-257, Standard Test Methods for D-C Resistance or Conductance of Insulating Materials* at 50% relative humidity. Surface resistivity values are dependent upon the relative humidity. "Static decay" is a measure of the time required in seconds for a surface exposed to both plus and minus 5kV charge to dissipate 90% of the charge when grounded, as determined in accordance with *Federal Test Method Standard (FTM) 101C, Method 4046, Electrostatic Properties of Materials* at 50% relative humidity. For purposes of the present invention, as used herein in the specification and the claims, surface resistivity and static decay measurements are conducted at 50% relative humidity. Such properties make the microporous material of the present invention particularly suitable for articles, such as articles in the form of a sheet, including both single sheet articles or multi-layer sheet articles, useful as substrates for the microelectronics industry, for example in the manufacture of RFID tags or smart cards.

In a multi-layer article of the present invention, the article may be in the form of a sheet wherein at least one layer comprises a microporous material as described above. The microporous material can comprise an inner layer of the multi-layer article, although it is also suitable for use as an outer layer of the article.

Further, the present invention provides a process for preparing an article in the form of a microporous sheet comprising:

    a) providing processing plasticizer, polyolefin, finely-divided, substantially water insoluble particulate filler, and at least one retrospectively identifiable taggant material, wherein the taggant material provides at least one observable feature chosen from color, size, shape, electrical resistance, a detectable odor, a feature that is identifiable audibly, and a response to an energy stimulus chosen from visible light, non-visible light, heat, cold, electric current, electrical energy, and a magnetic field;

    b) combining the processing plasticizer, polyolefin, particulate filler, and taggant material to form a substantially uniform mixture;

    c) introducing the mixture into a heated barrel of a screw extruder to which is attached a sheeting die;

    d) passing the mixture through the extruder and die to form a continuous microporous sheet;

    e) removing the processing plasticizer from the sheet using an organic extraction liquid; and

    f) removing the extraction liquid from the sheet. The microporous sheet can comprise any of those described above and can comprise any of the aforementioned polyolefins, particiulate fillers, and taggant materials in any of the levels previously described for these components.

A sheet of microporous material that contains taggant material can be prepared by mixing the thermoplastic organic polymer, filler particles, if desired, and taggant, and any other additional ingredient, e.g. plasticizer, antioxidant, and/or lubricant, a substantially uniform mixture is obtained. Then, the mixture together with additional processing plasticizer, if required, is introduced into the heated barrel of a screw extruder to which is attached a sheeting die. A continuous sheet formed by the sheeting die is produced. Optionally, the sheet may be forwarded to a pair of heated calender rolls acting cooperatively to form a continuous sheet of lesser thickness than the continuous sheet exiting from the die.

The continuous sheet is then forwarded to a first extraction zone where the processing plasticizer is substantially removed by extraction with an organic liquid that is a good solvent for the processing plasticizer and a poor solvent for the organic polymer, and more volatile than the processing plasticizer. Generally, but not necessarily, both the processing plasticizer and the organic extraction liquid are substantially immiscible with water. The continuous sheet is then forwarded to a second extraction zone where the organic extraction liquid is substantially removed by steam and/or water. The continuous sheet is then passed through a forced air dryer for substantial removal of residual water and remaining residual organic extraction liquid. From the dryer the continuous sheet, which is a microporous material, can be passed to a take-up roll.

A sheet formed by the process of the present invention can have a thickness of 2 to 20 mil (50.8 to 508 microns). However, it should be understood that the sheet of microporous material may have a thickness less than or greater than the aforementioned thickness range, depending upon desired end uses thereof.

For purposes of the present invention, the processing plasticizer discussed above should have little solvating effect on the thermoplastic organic polymer at 60 °C, and only a moderate solvating effect at elevated temperatures on the order of 100. °C. The processing plasticizer is generally a liquid at room temperature. Non-limiting examples of the processing plasticizer include processing oils such as paraffinic oil, naphthenic oil, or aromatic oil. Examples of processing oils include, but are not limited to, those processing oils meeting the requirements of ASTM D 2226-82, Types 103 and 104. Advantageously, the processing oil has a pour point of less than 22 °C, according to ASTM D 97-66 (reapproved 1978), e.g., less than 10 °C. Non-limiting examples of processing oils that may be used include Shellflex® 412 oil, Shellflex® 371 oil (Shell Oil Co.), which are solvent refined and hydrotreated oils derived from naphthenic crude oils, ARCOprime® 400 oil (Atlantic Richfield Co. ) and Kaydol® oil (Witco Corp.), which are white mineral oils. Other non-limiting examples of processing plasticizers, include phthalate ester plasticizers, such as dibutyl phthalate, bis(2-ethylhexyl) phthalate, diisodecyl phthalate, dicyclohexyl phthalate, butyl benzyl phthalate, and ditridecyl phthalate.

Organic extraction liquids that can be used are of a diverse nature. Non-limiting examples of organic extraction liquids include 1,1,2- trichloroethylene, perchloroethylene, 1,2-dichloroethane, 1,1,1- trichloroethane, 1,1,2- trichloroethane, methylene chloride, chloroform, 1,1,2-trichloro-1,2,2- trifluoroethane, isopropyl alcohol, diethyl ether, acetone, hexane, heptane, and toluene.

The residual content of the processing plasticizer in the microporous material is typically less than 10 percent by weight, e.g., less than 5 percent by weight, of the microporous material. Such a residual content can be reduced even further by additional extractions using the same or a different organic extraction liquid.

Sheets of the microporous material produced by the above-described process can be used as a substrate for printing. Alternatively, those sheets may be stretched and the stretched microporous material used as a substrate for printing. It will be appreciated that stretching of the microporous sheet increases both the void volume of the material and induces regions of molecular orientation in the polyolefin. As is well known in the art, many of the physical properties of molecularly oriented thermoplastic organic polymer, including tensile strength, tensile modulus, Young's modulus, and others, differ considerably from those of the corresponding thermoplastic organic polymer having little or no molecular orientation.

Stretched microporous sheet material can be produced by stretching the sheet in at least one stretching direction above its elastic limit. Suitable means for stretching the sheet are well known in the art and will not be discussed herein.

Microporous sheet material, whether or not stretched, is printable using any of the printing media printing processes previously described.

It should be understood that the microporous material typically in the form of a sheet comprising a taggant may constitute (1) a Document in and of itself, for example when used to prepare financial documents such as checks or certificates of deposit, or stock certificates; or (2) one or more layers or substrates in a multi-layer Document such as a laminate structure used, for example, as an identification card, a driver's license, or a security label. The one or more retrospectively identifiable taggent(s) present within the microporous material matrix can provide a complex security feature that can assist in prevention of counterfeiting or illegal alteration of the Document.

The invention is further described in conjunction with the following examples, which are to be considered as illustrative rather than limiting, and in which all parts are parts by weight and all percentages are percentages by weight unless otherwise specified.

## EXAMPLES

## PART 1 - MIX PREPARATION

The dry ingredients listed in Tables 2 and 3 were weighed into a FM-130D Littleford plough blade mixer with one high intensity chopper style mixing blade in the order and amounts specified. The dry ingredients were premixed for 15 seconds using only the plough blades of the mixer. The process oil was then charged into the top of the mixer by means of a pump equipped with a spray nozzle, with only the plough blades turning. Pumping time to charge the process oil into the mixer for the examples varied from 45 to 60 seconds. The contents of the mixer were then mixed for 30 seconds using both the mixer's high intensity chopper blade and plough blades. The mixer was shut off and the internal sides of the mixer were scrapped down to insure all ingredients were evenly mixed. The mixer was turned back on and the mixture was mixed for an additional 30 seconds with both the high intensity chopper and plough blades. The mixer was then turned off and the mixture dumped into a storage container.

TABLE 2 - Ingredients in Examples 1-5 Example No.

| Ingredients/ | 1 | 2 | 3 | 4 | 5 |
|---|---|---|---|---|---|
| | Amount (Grams) | | | | |
| Silica (a) | 2268 | 2268 | 2268 | 2194 | 2194 |
| UHMWPE (b) | 631 | 631 | 631 | 656 | 656 |
| IIDPE (c) | 600 | 600 | 600 | 656 | 656 |
| $TiO_2$ (d) | 45 | 45 | 45 | 90 | 90 |
| Process oil (e) | 3810 | 3810 | 3810 | 3862 | 3862 |
| Lubricant (f) | 22.7 | 22.7 | 22.7 | 22.7 | 22.7 |
| Antioxidant (g) | 15.3 | 15.3 | 15.3 | 15.3 | 15.3 |
| Security Additive (h) -MICROTAGGANT® | | | | | |
| IR covert taggants (1) | 22 | 11 | --- | --- | --- |
| -Brown Alphaflock(2) | --- | --- | 18 | --- | --- |
| -NightGlo™ NG-15(3) | --- | --- | --- | 76 | --- |
| -NightGlo™ NG-20(4) | --- | --- | --- | --- | 76 |
| -Techmer PM Blue (5) | 45 | 45 | 45 | --- | --- |

(a) Hi-Sil® SBG precipitated silica (PPG Industries, Inc.)
(b) GUR® 4130 Ultra High Molecular Weight Polyethylene (UHMWPE) (Ticona Corp.)
(c) Fina® 1288 High Density Polyethylene (HDPE), (Total Petrochemicals)
(d) Tipure® R-103 titanium dioxide (E.I. du Pont de Nemours and Company)
(e) Tufflo® 6056 process oil (Lyondell Petroleum Corp)
(f) Synpro® calcium stearate lubricant (Polymer Additives Division, Ferro Corp)
(g) Cyanox® 1790 antioxidant (Cytec Industries, Inc.)
(h)(1) MICROTAGGANT® IR covert taggant (Microtrace, LLC)
(h)(2) Brown Alphaflock viscose fiber (Alpha Flock, a division of Villafibres, Ltd.)
(h)(3) NightGlo™ NG-15 glow-in-the-dark pigment reported to have an average particle diameter of 14 microns (DayGlo Color Corporation, Cleveland, Ohio)
(h)(4) NightGlo™ NG-20 glow-in-the-dark pigment reported to have an average particle diameter of 20 microns (DayGlo Color Corporation, Cleveland, Ohio)
(h)(5) Techmer PM 52511E25 Blue additive (Techmer PM, Rancho Dominguez, California)

TABLE 3 - Ingredients in Examples 6-10 Example No.

| Ingredients/ | 6 | 7 | 8 | 9 | 10 |
|---|---|---|---|---|---|
| | Amount (Grams) | | | | |
| Silica (a) | 2270 | 2270 | 2270 | 2270 | 2270 |
| UHMWPE (b) | 654 | 654 | 654 | 654 | 656 |
| HDPE(c) | 651 | 617 | 580 | 470 | 619 |
| $TiO_2$(d) | 95.3 | 95 | 95 | 95 | 90 |
| Process oil (e) | 3791 | 3791 | 3791 | 3791 | 3862 |
| Lubricant (f) | 22.7 | 22.7 | 22.7 | 22.7 | 22.7 |
| Antioxidant (g) | 15.9 | 15.9 | 15.9 | 15.9 | 15.3 |
| - Microtrace MICROTAGGANT® | | | | | |

(continued)

| Ingredients/ | 6 | 7 | 8 | 9 | 10 |
|---|---|---|---|---|---|
| | | | Amount (Grams) | | |
| Forensic in HDPE (h)(6) -ARmark™ Covert | 3.6 | --- | --- | --- | --- |
| Marker in HDPE (h)(7) | --- | 37.1 | 74.3 | 185.7 | 37.1 |
| - NightGlo™ NG-20(h)(4) | | | | | 76.0 |
| (h)(6) MICROTAGGANT® Forensic taggant @ 10.26% wt % in Fina® 1288 High Density Polyethylene (HDPE) (Microtrace, LLC) (h)(7) ARmark™ Covert Marker, indicia printed on surface @ 1 wt % in Fina® 1288 High Density Polyethylene (HDPE) (ARmark™ Authentication Technologies) (h)(4) NightGlo™ NG-20 glow-in-the-dark pigment reported to have an average particle diameter of 20 microns (DayGlo Color Corporation, Cleveland, Ohio) | | | | | |

## PART 2 - EXTRUSION, CALENDERING AND EXTRACTION

The mixtures of ingredients reported in Tables 2 and 3, which were prepared in Part 1, were each extruded and calendered into sheet form using the following procedures. A gravimetric loss in weight feed system (K-tron model # K2MLT35D5) was used to feed the mixture into a 27 millimeter (mm) twin screw extruder (Leistritz Micro-27gg). The extruder barrel comprised eight temperature zones and a heated adaptor attached to the sheet die. The extrusion mixture feed port was located just prior to the first temperature zone. An atmospheric vent was located in the third temperature zone. A vacuum vent was located in the seventh temperature zone.

Each mixture was fed individually into the extruder at a nominal rate of 90 grams/minute. Additional processing oil was injected at the first temperature zone, if required, to achieve the desired total oil content in the extruded sheet (typically 56-58 wt.%. Extrudate from the barrel was discharged into a 15 centimeter (cm) wide sheet Masterflex® die having a 1.5 millimeter discharge opening. The extrusion melt temperature was 203-210 °C.

Calendering was accomplished using a three-roll vertical calender stack with one nip point and one cooling roll. Each of the rolls had a chrome surface. Roll dimensions were approximately 41 cm in length and 14 cm in diameter. The top roll temperature was maintained between 135 °C and 140 °C. The middle roll temperature was maintained between 140 °C and 145 °C. The bottom roll was a cooling roll wherein the temperature was maintained between 10 and-21 °C. The extrudate was calendered into sheet form and passed over the bottom water cooled roll and wound. The material of Examples 7, 8 and 9 were calendared to a thickness of about 7 mils.

A sample of each of the calendered sheets was soaked in TCE until a target residual oil concentration of about 2-5% was achieved, typically one hour. Afterwards, the extracted sheet was air dried. Identification of embedded taggant material was performed by the methods described hereinafter in Part 4.

## PART 3 - LAMINATE PREPARATION

Laminates described in Table 4 were prepared by placing a single layer of the sheet material of Example 7, 8 or 9 between two layers of laminating film, each measuring 8.5" x 5.5" (21.59 cm by 13.97 cm). The adhesive covered surface of each laminating film faced the material of the examples. Before completing the assembly of the layers, one 1.5" x 5.5" (3.81 cm by 13.97 cm) strip of un-coated polyester film was placed between the example sheet and one of the laminating film layers at one of the 5.5" edges of the layered construction. The resultant book was placed inside a 9.5" x 6.5" (24.13 cm by 16.51 cm) paper folder. A Card Guard Model 6100 roll laminator was preheated to 300ºF (148.89°C) for 20 minutes. Once preheated, the rolls of the laminator were switched on and the folder containing the book construction was inserted into and allowed to travel between the rolls of the laminator at the units pre-set speed. Upon exiting the rolls of the laminator the resultant laminate was removed from the protective folder, allowed to cool before testing.

TABLE 4 - Example Sheets Used for Laminates of Examples 11-13

| | Example No. | | |
|---|---|---|---|
| Ingredients/ | 11 | 12 | 13 |
| Sheet of Example 7 | x | --- | --- |

(continued)

| Ingredients/ | Example No. | | |
|---|---|---|---|
| | 11 | 12 | 13 |
| Sheet of Example 8 | --- | x | --- |
| Sheet of Example 9 | --- | --- | x |
| Trans-Kote® KRTY 7/3 glossy laminating film (i) | x | x | x |
| (i) Trans-Kote® KRTY 7/3 glossy laminating film (Transilwrap Company, Inc.) | | | |

PART 4 - TESTING AND RESULTS

The taggant material(s) incorporated into Examples 1- 13 were evaluated using an appropriate identification method, as described in Tables 5 and 6. Detection of infra-red detectable taggant material was determined with a Microtrace IIIb laser pen that was pointed at the sheet from a distance of from 0 to 6 inches (0 - 15.2 centimeters). Detection of long wave ultraviolet light detectable taggant material was determined with a Spectraline Q228 UV lamp (365 nm) by holding the lamp 1 to 6 inches (2.5 to 15.2 centimeters) from the sheet. Fluorescing materials were visible to the naked eye. Audible detection of taggant material was determined with a Microtrace audio detector. The detector was held approximately 1 inch (2.5 centimeters) from the surface of the sheet. An audible sound was heard and a light on the detector was activated. Detection of visible properties was determined by examining the product under fluorescent lighting. Detection of NightGlo™ glow-in-the-dark pigment was determined by examining the treated sample in a dark room. Detection of photoluminescent taggant material was determined by scanning the sheet with a PTI scanning spectrofluorimeter equipped with monochromatic. Detection of the Microtrace forensic taggants and ARmark™ covert markers was completed using a Nikon SMU-Z stereo microscope. In the case of the examples incorporating Microtrace forensic tags, the number of identifiable tags was determined within a 20X50mm area (10 cm$^2$). Identifiable meaning a tag was found, but the coded information was not necessarily easily read. For the examples incorporating ARmark covert markers, both the identifiable and legible (encoded information fully readable) tags were counted in a 20X50mm area (10 cm$^2$). These values are listed in Table 6. The porosity, also known as void volume of a microporous material, is expressed as percent by volume and is determined according to the following equation:

$$\text{Porosity} = 100 \frac{(\text{Total Volume of material} - \text{Volume of Solids})}{\text{Total Volume of material}}$$

The calculation of the porosity of Example 10 is provided in Table 7.

Electrostatic characterization tests were performed by ETS Testing Laboratories on samples of Example 9 and the formulation of Example 5 prepared as a 10 mil sheet on a commercial line of the type described in column 13, lines 9-65 in U.S. Patent 6,114,023. A Comparative Example (CE) of Klockner 10mil un-coated co-polymer PVC available from Klockner Pentaplast of America, Inc. was also included. Surface Resistivity testing was carried out in accordance with D257-07 Standard Test Methods for DC Resistance or Conductance of Insulating Materials. Static Decay testing was conducted on the samples after 48 hours of conditioning in an ETS Series 500/5000 Controller and Chamber to within 1% of the required relative humidity. An ETS Model 406 Static Decay Meter was used to perform the static decay measurements and an ETS STM-1 System Test Module was used to verify calibration of the Static Decay Meter. A Faraday Test cage was used to house the samples. A 5kV charge across the surface of the specimen was applied. The time to dissipate 90% of the charge when grounded was measured under the 50% relative humidity conditions. The arithmetic average of the Static Decay and Surface Resistivity are included in Table 8.

TABLE 5 - Identification Methods Used for Taggants in Examples 1-5

| | |
|---|---|
| Example 1 | Identified with IR, long wave UV and audio detector |
| Example 2 | Identified with IR, long wave UV and audio detector |
| Example 3 | Visible with no magnification |
| Example 4 | Identified with long wave UV, glows in dark, photoluminescent |
| Example 5 | Identified with long wave UV, glows in dark, photoluminescent |

TABLE 6 - Quantification of Taggants in Examples 6-10

| Example No. | Identifiable Taggants /10 cm$^2$ | Legible Taggants /10 cm$^2$ |
|---|---|---|
| Example 6 | 8 | --- |
| Example 7 | 2 | 0 |
| Example 8 | 9 | 3 |
| Example 9 | 24 | 9 |
| Example 10 | 2 | 1 |
| Example 11 | 7 | 2 |
| Example 12 | 24 | 5 |

Table 7 - Porosity Determination of Example 10

| Teslin Ingredients | grams | Weight Fraction | Density, g/cc | Volume of Solids/ g sheet (cc/g) |
|---|---|---|---|---|
| HDPE (c) | 619 | 0.1578 | 0.941 | 0.1677 |
| UHMWPE (b) | 656 | 0.1672 | 0.9325 | 0.1793 |
| TiO$_2$ (d) | 90 | 0.0229 | 4.23 | 0.0054 |
| Lubricant (f) | 22.7 | 0.0058 | 1.12 | 0.0052 |
| Antioxidant (g) | 15.3 | 0.0039 | 1 | 0.0039 |
| NightGlo™ NG-20(h)(4) | 76 | 0.0194 | 4 | 0.0048 |
| ARmark™ Covert Marker in HDPE (h)(7) | 37.1 | 0.0095 | 0.941 | 0.0100 |
| Silica (a) Process Oil | 2270 | 0.5786 | 2.1 | 0.2755 |
| (e) | 137 | 0.0350 | 0.8 | 0.0438 |
| Total | 3923 | 1.0000 | | 0.6956 |

Extracted Sheet Density,

| | |
|---|---|
| g/cc | 0.64 |
| Inverse of Extracted Sheet Density, cc/g which is the Total Volume of the sheet. | 1.57 |
| Total Volume (1.57 cc/g) - Volume of Solids ( 0.6956 cc/g) divided by Total Volume (1.57 cc/g) times 100 = Porosity | 55.7% |

Table 8 - Results of Static Decay & Surface Resistivity for Examples 5 and 9

| Example No. | Average of Static Decay Results @ 50% RH, seconds | Average of Surface Resistivity Results @ 50% RH, ohms/sq |
|---|---|---|
| 5 | 0.022 | 3.51 x 10$^9$ |
| 9 | 0.027 | 7.91 x 10$^9$ |
| CE | 6.17 | Not Done |

## Claims

1. A microporous material comprising a matrix of polyolefin, finely-divided, substantially water insoluble particulate filler, a network of interconnecting pores communicating throughout the microporous material, and at least one retrospectively identifiable taggant material selected from any material, or arrangement of materials that when embedded in an article comprising a microporous material provides a marker, signature or code to the article that is capable of retrospective identification embedded within the matrix, wherein the polyolefin comprises 20 to 60 weight percent, based on the weight of the microporous material.

2. The microporous material of claim 1 wherein the polyolefin comprises:

(a) ultrahigh molecular weight polyolefin comprising ultrahigh molecular weight polyethylene and/or ultrahigh molecular weight polypropylene;
(b) high density polyolefin comprising high density polyethylene and/or high density polypropylene or mixtures thereof; and
the finely-divided particulate filler comprises precipitated silica, preferably the polyolefin comprises from 10 to 100 weight percent of ultrahigh molecular weight polyolefin, and from 0 to 90 weight percent of high density polyolefin, where weight percents are based on the total weight of polyolefin in the microporous material.

3. The microporous material of claim 2 wherein the matrix exhibits a surface resistivity in the range of $1x10^5$ to $1x10^{12}$ ohms per square, and a static decay time ranging from 0.001 to 2 seconds as measured at 50% relative humidity.

4. The microporous material of claim 2 wherein the pores comprise on average 35 to 65 percent by volume of the microporous material.

5. The microporous material of claim 1 wherein the taggant material provides at least one retrospectively observable feature chosen from color, size, shape, electrical resistance, photoluminescence, a detectable odor, a feature that is identifiable audibly, and a response to energy stimuli chosen from visual light, non-visible light, heat, cold, electric current, electrical energy, and a magnetic field or wherein the taggant material provides an observable feature in response to energy stimuli chosen from fluorescent light, infra-red radiation, ultraviolet radiation, X-ray radiation and gamma radiation.

6. The microporous material of claim 1 wherein the taggant material is present in an amount ranging from 0.001 to 10 weight percent, based on the weight of the microporous material or wherein the taggant material is present in a positive amount of up to and including 0.001 weight percent, based on the weight of the microporous material.

7. An article in the form of a sheet comprising the microporous material of any of claims 1 to 6.

8. The article of claim 7 wherein the article is in the form of a sheet having a thickness of 50.8 to 508 $\mu$m (2 to 20 mils).

9. The article of claim 7 comprising a document chosen from an identification document, a legal document, a financial document and a certificate of accomplishment.

10. A multi-layer article wherein at least one layer comprises the microporous material of claim 1.

11. The multi-layer article of claim 10, wherein the layer comprising the microporous material is an inner layer of the multi-layer article.

12. The multi-layer article of claim 10 wherein the taggant material is present in the microporous material in an amount ranging from 0.001 to 80 weight percent, based on the weight of the microporous material.

13. A process for preparing an article in the form of a microporous sheet comprising:

a) providing a processing plasticizer, a polyolefin, a finely-divided, substantially water insoluble particulate filler, and at least one retrospectively identifiable taggant material, wherein the taggant material provides at least one observable feature chosen from color, size, shape, electrical resistance, a detectable odor, a feature that is identifiable audibly, and a response to an energy stimulus chosen from visible light, non-visible light, heat, cold, electric current, electrical energy, and a magnetic field;
b) combining the processing plasticizer, polyolefin, particulate filler, and taggant material to form a substantially uniform mixture;
c) introducing the mixture into a heated barrel of a screw extruder to which is attached a sheeting die;
d) passing the mixture through the extruder and die to form a continuous microporous sheet;
e) removing the processing plasticizer from the sheet using an organic extraction liquid; and

f) removing the extraction liquid from the sheet,
wherein the polyolefin comprises from 20 to 60 weight percent of the microporous sheet, based on the weight of the microporous sheet.

14. The process of claim 13 wherein the taggant material is present in the microporous sheet in amounts ranging from 0.001 to 10 weight percent, based on the weight of the microporous sheet.

15. The process of claim 13 wherein the taggant material is present in the microporous sheet in a positive amount of up to and including 0.001 weight percent, based on the weight of the microporous sheet.

**Patentansprüche**

1. Mikroporöses Material, enthaltend eine Matrix aus Polyolefin, fein verteilten im Wesentlichen wasserunlöslichen teilchenförmigen Füllstoff, ein Netzwerk von miteinander verbundenen Poren, die durch das mikroporöse Material hindurch miteinander kommunizieren, und wenigstens einen nachträglich identifizierbaren Markierstoff, ausgewählt aus jedem Material oder einer Anordnung von Materialen, die, wenn sie in einen Gegenstand, der ein mikroporöses Material enthält, eingebettet sind, dem Gegenstand eine Markierung, Signatur oder Code bereitstellen und die nachträglich identifiziert werden können, wenn sie in der Matrix eingebettet sind, wobei das Polyolefin 20 bis 60 Gew.-%, bezogen auf das Gewicht des mikroporösen Materials, ausmacht

2. Mikroporöses Material nach Anspruch 1, wobei das Polyolefin umfasst:

   (a) Polyolefin mit ultrahohem Molekulargewicht, das Polyethylen mit ultrahohem Molekulargewicht und/oder Polypropylen mit ultrahohem Molekulargewicht umfasst,
   (b) Polyolefin hoher Dichte, das Polyethylen hoher Dichte und/oder Polypropylen hoher Dichte umfasst, oder Mischungen davon und
   der fein verteilte teilchenförmige Füllstoff Fällungskieselsäure enthält, wobei das Polyolefin vorzugsweise

   10 bis 100 Gew.-% Polyolefin mit ultrahohem Molekulargewicht und
   0 bis 90 Gew.-% Polyolefin hoher Dichte enthält, wobei die Gewichtsprozentangaben sich auf das Gesamtgewicht von Polyolefin in dem mikroporösen Material beziehen.

3. Mikroporöses Material nach Anspruch 2, wobei die Matrix einen Oberflächenwiderstand im Bereich von $1\times10^5$ bis $1\times10^{12}$ Ohm/□ und eine statische Abklingzeit im Bereich von 0,001 bis 2 s, gemessen bei 50% relativer Feuchte, zeigt.

4. Mikroporöses Material nach Anspruch 2, wobei die Poren im Mittel 35 bis 65 Vol.-% des mikroporösen Materials ausmachen.

5. Mikroporöses Material nach Anspruch 1, wobei der Markierstoff wenigstens ein nachträglich beobachtetes Merkmal bereitstellt, ausgewählt aus Farbe, Größe, Form, elektrischem Widerstand, Photolumineszenz, detektierbarem Geruch, einem Merkmal, das sich durch Gehör identifizieren lässt und einer Antwort auf Energieanregung, ausgewählt aus sichtbarem Licht, nichtsichtbarem Licht, Wärme, Kälte, elektrischem Strom, elektrischer Energie und einem magnetischen Feld, oder wobei der Markierstoff ein beobachtetes Merkmal in Antwort auf eine Energieanregung bereitstellt, ausgewählt aus fluoreszierendem Licht, Infrarotstrahlung, Ultraviolettstrahlung, Röntgenstrahlung und Gammastrahlung.

6. Mikroporöses Material nach Anspruch 1, wobei der Markierstoff in einer Menge im Bereich von 0,001 bis 10 Gew.-%, bezogen auf das Gewicht des mikroporösen Materials, vorhanden ist oder wobei der Markierstoff in einer positiven Menge bis zu einschließlich 0,001 Gew.-%, bezogen auf das Gewicht des mikroporösen Materials, vorhanden ist.

7. Gegenstand in Form eines Blatts, enthaltend das mikroporöse Material nach einem der Ansprüche 1 bis 6.

8. Gegenstand nach Anspruch 7, wobei der Gegenstand in Form eines Blatts mit einer Dicke von 50,8 bis 508 μm (2 bis 20 Mil) vorliegt.

9. Gegenstand nach Anspruch 7, enthaltend ein Dokument, das aus einem Identifikationsdokument, einer Urkunde, einem Finanzdokument und einem Leistungsnachweis ausgewählt ist.

**10.** Mehrschichtiger Gegenstand, wobei wenigstens eine Schicht das mikroporöse Material nach Anspruch 1 enthält.

**11.** Mehrschichtiger Gegenstand nach Anspruch 10, wobei die Schicht, die das mikroporöse Material enthält, eine innere Schicht des mehrschichtigen Gegenstands ist.

**12.** Mehrschichtiger Gegenstand nach Anspruch 10, wobei der Markierstoff in dem mikroporösen Material in einer Menge im Bereich von 0,001 bis 80 Gew.-%, bezogen auf das Gewicht des mikroporösen Materials, vorhanden ist.

**13.** Verfahren zur Herstellung eines Gegenstands in Form eines mikroporösen Blatts, umfassend:

a) Bereitstellen eines Verarbeitungsweichmachers, eines Polyolefins, eines fein verteilten im Wesentlichen wasserunlöslichen teilchenförmigen Füllstoffs und wenigstens eines nachträglich identifizierbaren Markierstoffs, wobei der Markierstoff wenigstens ein beobachtbares Merkmal bereitstellt, ausgewählt aus Farbe, Größe, Form, elektrischem Widerstand, detektierbarem Geruch, einem Merkmal, das sich durch Gehör identifizieren lässt, und einer Antwort auf Energieanregung, ausgewählt aus sichtbarem Licht, nichtsichtbarem Licht, Wärme, Kälte, elektrischem Strom, elektrischer Energie und einem magnetischen Feld,
b) Kombinieren des Verarbeitungsweichmachers, Polyolefins, teilchenförmigen Füllstoffs und Markierstoffs, um eine im Wesentlichen einheitliche Mischung zu bilden,
c) Einbringen der Mischung in einen erwärmten Zylinder eines Schneckenextruders, an dem eine Blattdüse angeordnet ist,
d) Hindurchführen der Mischung durch den Extruder und die Düse, um ein kontinuierliches mikroporösen Blatt zu bilden,
e) Entfernen des Verarbeitungsweichmachers von dem Blatt unter Verwendung einer organischen Extraktionsflüssigkeit und
f) Entfernen der Extraktionsflüssigkeit aus dem Blatt,
wobei das Polyolefin 20 bis 60 Gew.-% des mikroporösen Blatts, bezogen auf das Gewicht des mikroporösen Materials, ausmacht.

**14.** Verfahren nach Anspruch 13, wobei der Markierstoff in dem mikroporösen Blatt in Mengen im Bereich von 0,001 bis 10 Gew.-%, bezogen auf das Gewicht des mikroporösen Materials, vorhanden ist.

**15.** Verfahren nach Anspruch 13, wobei der Markierstoff in dem mikroporösen Blatt in einer positiven Menge im Bereich von bis zu und einschließlich 0,001 Gew.-%, bezogen auf das Gewicht des mikroporösen Blatts, vorhanden ist.

**Revendications**

**1.** Matériau microporeux comprenant une matrice de polyoléfine, une charge particulaire finement divisée, sensiblement insoluble dans l'eau, un réseau de pores d'interconnexion communiquant à travers le matériau microporeux, et au moins un matériau traceur rétrospectivement identifiable choisi parmi n'importe quel matériau ou agencement de matériaux qui, lorsqu'il est incorporé à un article comprenant un matériau microporeux, fournit un marqueur, une signature ou un code à l'article qui est capable d'identification rétrospective incorporée à la matrice, dans lequel la polyoléfine comprend 20 à 60 % en poids, sur la base du poids du matériau microporeux.

**2.** Matériau microporeux selon la revendication 1, dans lequel la polyoléfine comprend :

(a) une polyoléfine de masse moléculaire très élevée comprenant du polyéthylène de masse moléculaire très élevée et/ou du polypropylène de masse moléculaire très élevée ;
(b) une polyoléfine haute densité comprenant du polyéthylène haute densité et/ou du polypropylène haute densité ou
des mélanges de ceux-ci ; et
la charge particulaire finement divisée comprend de la silice précipitée, de préférence, la polyoléfine comprend de 10 à 100 % en poids de polyoléfine de masse moléculaire très élevée, et de 0 à 90 % en poids de polyoléfine haute densité, les pourcentages en poids étant basés sur le poids total de polyoléfine dans le matériau microporeux.

**3.** Matériau microporeux selon la revendication 2, dans lequel la matrice présente une résistivité de surface dans la plage de $1 \times 10^5$ à $1 \times 10^{12}$ ohms par carré, et un temps de déclin statique allant de 0,001 à 2 secondes tel que mesuré à une humidité relative de 50 %.

**4.** Matériau microporeux selon la revendication 2, dans lequel les pores comprennent en moyenne 35 à 65 % en volume du matériau microporeux.

**5.** Matériau microporeux selon la revendication 1, dans lequel le matériau traceur fournit au moins une caractéristique rétrospectivement observable choisie parmi la couleur, la taille, la forme, la résistance électrique, la photoluminescence, une odeur détectable, une caractéristique qui est identifiable de manière sonore et une réponse aux stimuli énergétiques choisis parmi la lumière visible, la lumière non visible, la chaleur, le froid, le courant électrique, l'énergie électrique et un champ magnétique, ou dans lequel le matériau traceur fournit une caractéristique observable en réponse aux stimuli énergétiques choisis parmi la lumière fluorescente, le rayonnement infrarouge, le rayonnement ultraviolet, le rayonnement de rayons X et le rayonnement gamma.

**6.** Matériau microporeux selon la revendication 1, dans lequel le matériau traceur est présent dans une quantité allant de 0,001 à 10 % en poids, sur la base du poids du matériau microporeux, ou dans lequel le matériau traceur est présent dans une quantité positive pouvant atteindre et incluant 0,001 % en poids, sur la base du poids du matériau microporeux.

**7.** Article sous la forme d'une feuille comprenant le matériau microporeux selon l'une des revendications 1 à 6.

**8.** Article selon la revendication 7, dans lequel l'article se présente sous la forme d'une feuille ayant une épaisseur de 50,8 à 508 $\mu$m (2 à 20 mils).

**9.** Article selon la revendication 7, comprenant un document choisi parmi un document d'identification, un document juridique, un document financier et un certificat de réussite.

**10.** Article multicouche dans lequel au moins une couche comprend le matériau microporeux selon la revendication 1.

**11.** Article multicouche selon la revendication 10, dans lequel la couche comprenant le matériau microporeux est une couche interne de l'article multicouche.

**12.** Article multicouche selon la revendication 10, dans lequel le matériau traceur est présent dans le matériau microporeux dans une quantité allant de 0,001 à 80 % en poids, sur la base du poids du matériau microporeux.

**13.** Procédé de préparation d'un article sous la forme d'une feuille microporeuse comprenant :

a) la fourniture d'un plastifiant de traitement, d'une polyoléfine, d'une charge particulaire finement divisée, sensiblement insoluble dans l'eau, et d'au moins un matériau traceur rétrospectivement identifiable, dans lequel le matériau traceur fournit au moins une caractéristique observable choisie parmi la couleur, la taille, la forme, la résistance électrique, une odeur détectable, une caractéristique qui soit identifiable de manière sonore, et une réponse à un stimulus énergétique choisi parmi la lumière visible, la lumière non visible, la chaleur, le froid, le courant électrique, l'énergie électrique et un champ magnétique ;
b) la combinaison du plastifiant de traitement, de la polyoléfine, de la charge particulaire et du matériau traceur pour former un mélange sensiblement uniforme ;
c) l'introduction du mélange dans un fourreau chauffé d'une extrudeuse à vis à laquelle est fixée une filière pour l'extrusion de feuille ;
d) le passage du mélange à travers l'extrudeuse et la filière pour former une feuille microporeuse continue ;
e) le retrait du plastifiant de traitement de la feuille en utilisant un liquide d'extraction organique ; et
f) le retrait du liquide d'extraction de la feuille,
dans lequel la polyoléfine comprend de 20 à 60 % en poids de la feuille microporeuse, sur la base du poids de la feuille microporeuse.

**14.** Procédé selon la revendication 13, dans lequel le matériau traceur est présent dans la feuille microporeuse dans des quantités allant de 0,001 à 10 % en poids, sur la base du poids de la feuille microporeuse.

**15.** Procédé selon la revendication 13, dans lequel le matériau traceur est présent dans la feuille microporeuse en une quantité positive pouvant aller jusqu'à et incluant 0,001 % en poids, sur la base du poids de la feuille microporeuse.

**EP 2 064 163 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4053433 A
- US 4390452 A
- US 6647649 B
- US 3772200 A
- US 20050067497 A
- US 5196262 A
- US 2940830 A
- US 4681750 A
- US 6114023 A